# FASCICULE DE BREVET EUROPEEN

(11) **EP 2 098 745 B1**
(45) Date de publication et mention de la délivrance du brevet: **22.12.2010**
(21) Numéro de dépôt: 09154155.7
(22) Date de dépôt: 02.03.2009
(51) Int. Cl.: F16D 48/06

(54) **Procédé de détermination automatique du point de léchage d'un embrayage par apprentissage**
Verfahren zur Ermittlung des Tastpunktes einer Kupplung durch einen Lernprozess
Method for ascertaining the touchpoint of a clutch by a learning process

(30) Priorité: 03.03.2008 FR 0851366
(43) Date de publication de la demande: 09.09.2009
(73) Titulaire: PEUGEOT CITROËN AUTOMOBILES S.A., 78140 Velizy Villacoublay (FR)
(72) Inventeur: Rocq, Gaëtan, 78125, LA BOISSIERE-ECOLE (FR); Siegfried, Adrien, 92250, LA GARENNE COLOMBES (FR); Launay, Cédric, 78680, EPONE (FR)

(56) Documents cités:
- DE-A1-102006 005 470
- US-A1- 2005 250 618
- US-A1- 2006 089 232
- US-A1- 2007 275 823

## Description

### Domaine technique

L'invention concerne un procédé de détermination du point de léchage d'un embrayage par apprentissage sur un véhicule hybride. L'invention a pour but notamment d'optimiser le point de léchage de l'embrayage assurant le couplage et le découplage entre un moteur thermique et une machine électrique. L'invention trouve une application particulièrement avantageuse dans le domaine des véhicules automobiles, notamment les véhicules de type hybride.

### Etat de la technique

Un véhicule de type hybride exploite deux types d'énergie, une énergie thermique et une énergie électrique dont la combinaison permet de garantir la traction du véhicule, tout en optimisant le rendement énergétique, et donc en diminuer la consommation en carburant du véhicule et du même coup la pollution.

On connaît les véhicules hybrides de type parallèle qui comporte un moteur thermique et une machine électrique reliées entre eux par l'introduction d'un embrayage

On citera notamment les documents US2007/275823, DE102006005470, US2006/089232 et US2005/250618 qui illustrent l'état de la technique.

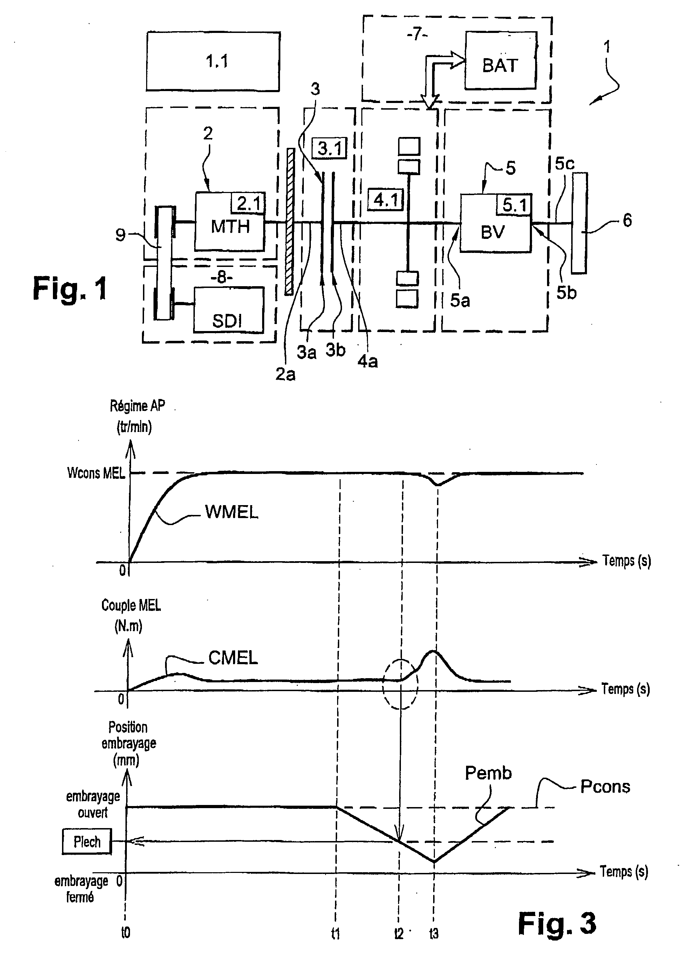

Une architecture de véhicule hybride parallèle est illustrée par la figure 1 qui montre un dispositif 1 de transmission comportant un ensemble d'organes dont un moteur thermique 2, un embrayage 3, une machine électrique 4, une boîte de vitesses 5, et des roues 6 qui forment une chaîne de traction.

Plus précisément, l'embrayage 3 comporte un premier disque 3a et un deuxième disque 3b d'embrayage. Le premier disque 3a d'embrayage est relié à un arbre 2a du moteur thermique 2. Et le deuxième disque 3b d'embrayage est relié à un arbre 4a de la machine électrique 4. En outre, l'arbre 4a de la machine électrique 4 et un arbre 5c des roues 6 sont reliés respectivement à une entrée 5a et à une sortie 5b de la boîte de vitesses 5.

Le moteur thermique 1 est mis en route par l'intermédiaire d'un système 8 de démarrage indépendant qui lui est relié par l'intermédiaire d'une courroie.

Le dispositif 1 de transmission est susceptible de fonctionner dans deux modes de fonctionnement. Dans un mode électrique, seule la machine électrique 4 fournit du couple aux roues. L'embrayage 3 reste alors ouvert de sorte que l'arbre 2a du moteur thermique 2 et l'arbre 4a de la machine électrique 4 sont désaccouplés l'un de l'autre. Dans ce mode, la machine électrique prélève de l'énergie au système de stockage d'énergie 7 tel qu'une batterie, et fonctionne en mode moteur.

Dans le mode hybride, l'arbre 5c des roues 6 est entraîné à la fois par le moteur thermique 2 et la machine électrique 4. L'embrayage 3 est alors fermé, de sorte que l'arbre 2a du moteur thermique et l'arbre 5c des roues 6 sont accouplés entre eux. Dans ce mode la machine électrique 4 fonctionne soit en mode moteur pour transmettre du couple aux roues 6 en parallèle du couple fourni par le moteur thermique afin d'ajuster le couple appliqué aux roues, soit en mode générateur afin de recharger la batterie 7, la machine étant alors entrainée par le moteur 2.

Chaque organe 2 à 5 est commandé par un calculateur de contrôle propre 2.1, 3.1, 4.1, 5.1. Ces calculateurs de contrôle 2.1, 3.1, 4.1, 5.1 sont eux-mêmes contrôlés par un calculateur unique 1.1 dit de supervision. Ce calculateur de supervision 1.1 est apte à synchroniser les actionnements des différents organes 2 à 5 afin de répondre à la volonté du conducteur du véhicule.

L'ensemble des calculateurs de contrôle 2.1, 3.1, 4.1, 5.1 sont aptes à piloter la chaîne de traction du véhicule (augmenter ou diminuer la vitesse du moteur thermique et/ou de la machine électrique) et sélectionner un mode de roulage du véhicule (mode urbain, mode économique, mode non polluant, mode sportif...), en fonction des différentes situations de vie et de l'état du véhicule. Le calculateur de supervision est également apte à coordonner toutes les phases transitoires et déterminer les fonctionnements de la machine électrique et du moteur thermique afin d'optimiser la consommation de carburant et la dépollution.

Un point de léchage permet de recaler la fonction de transfert de la position d'un actionneur d'embrayage par rapport au couple et ainsi maitriser le couple transmis par l'embrayage. On entend par point de léchage de l'embrayage, le point sur la courbe d'embrayage le plus avancé dans la direction de l'embrayage, pour lequel on ne transmet toujours pas de couple. L'objet de cette fonction de transfert est d'augmenter en fiabilité et en constance sur les prestations de transmission du couple de l'embrayage lors d'un démarrage du véhicule ou d'un changement de rapport de vitesse.

Dans l'état de la technique, un apprentissage et un recalage du point de léchage d'une chaîne de traction non hybride (en série) à transmission mécanique compact pilotée, communément appelé boite MCP, est faite à chaque démarrage du véhicule. Cet apprentissage et ce recalage du point de léchage est effectué à chaque démarrage du véhicule afin de prendre en compte l'usure ou les dispersions suite aux phénomènes thermiques. En effet, sur un véhicule non hybride, le moteur thermique est toujours allumé lors du démarrage.

Pour un véhicule comportant une chaîne de traction hybride à transmission mécanique compact pilotée, communément appelé boite MCP-H, l'apprentissage du point de léchage au moyen du moteur thermique ne peut être effectué lors du démarrage du véhicule. En effet, dans les véhicules de type hybride, la traction dudit véhicule au démarrage est effectuée par la machine électrique. Le moteur thermique reste donc à l'arrêt. L'apprentissage du point de léchage n'est donc possible qu'une seule fois et généralement au début de la durée de vie du véhicule hybride.

Cependant, l'apprentissage du point de léchage ne tient pas compte des phénomènes dynamiques cités auparavant tel que l'usure ou les dispersions suite aux phénomènes thermiques. En effet, l'apprentissage du point de léchage se fait en début de vie du véhicule hybride mais durant toute la vie du véhicule, le point de léchage se déplace en fonction de l'usure des différents éléments constituant l'embrayage, Il est donc nécessaire de recaler ledit point de léchage quand il y a besoin.

### Exposé de l'invention

La présente invention a pour but de remédier aux inconvénients des techniques exposées précédemment. A cette fin l'invention propose un procédé de détermination automatique du point de léchage d'un système d'embrayage par apprentissage. Dans ce contexte, l'invention permet l'apprentissage et le recalage du point de léchage du système d'embrayage sans nécessiter le démarrage du moteur thermique lors des démarrages du véhicule hybride. L'invention permet une rapidité d'apprentissage du fait de la dynamique de la machine électrique en régulation de régime. Elle permet également de contrôler constamment un couple du système d'embrayage et par conséquent de la chaîne de traction hybride sur la durée de vie du véhicule.

Plus précisément, l'invention a pour objet un procédé de détermination du point de léchage d'un embrayage de véhicule de type hybride au démarrage ou en changement de rapport de vitesse, ledit véhicule comportant une chaine de traction dont un moteur thermique et une machine électrique couplé entre eux par l'intermédiaire de l'embrayage de sorte que la combinaison du couple de la machine thermique et du couple de la machine électrique entraine la mise en rotation de l'arbre des roues du véhicule caractérisé en ce qu'il comporte les étapes suivantes,
A - vérification que la machine thermique est à l'arrêt et que l'embrayage est ouvert,
B - régulation du régime de la machine électrique,
C - fermeture lente de l'embrayage,
D - augmentation du couple de la machine électrique,
E - détection d'une différence de couple de la machine électrique,
F - détermination puis mémorisation de la position de l'actionneur d'embrayage au moment de cette détection,
G - détermination du point de léchage de l'embrayage.

L'invention comporte l'une quelconque des caractéristiques suivantes :
- l'embrayage est ouvert au maximum et le demeure pendant une durée déterminée.
- la régulation du régime de la machine électrique s'effectue vers une consigne donnée.
- la fermeture de l'embrayage s'effectue une fois que le régime de la machine électrique est stabilisé, afin de transmettre du couple résistif à la machine électrique et ainsi perturber sa régulation de régime.
- l'augmentation du couple de la machine électrique est effectuée pour compenser le couple résistif de l'embrayage.
- la détection d'une différence de couple de la machine électrique s'effectue pour les couples supérieurs à une valeur seuil.
- la valeur seuil est calibrable.
- la détermination de la position de l'actionneur d'embrayage, est effectuée par un capteur de position.
- une fois que le point de léchage est déterminée l'embrayage est ré-ouvert.

### Brèves description des dessins

L'invention sera mieux comprise à la lecture de la description qui suit et à l'examen des figures qui l'accompagnent. Celles-ci sont présentées à titre indicatif et nullement limitatif de l'invention.
La figure 1 (déjà décrite) représente schématiquement un dispositif de transmission selon l'état de la technique.
La figure 2 représente un diagramme du procédé selon l'invention.
La figure 3 montre des chronogrammes de signaux observables sur les différents organes 1 à 4 du dispositif de la figure 2 lors de la mise en oeuvre du procédé de l'invention.

### Description détaillée de modes de réalisation de l'invention

Les caractéristiques décrites et d'autres caractéristiques de l'invention résultent de la description suivante des modes de réalisations préférés.

Chaque véhicule hybride comporte un dispositif 1 de transmission de couple aux roues 6 comprenant des organes 2-5 et 7-8 tels qu'illustrés à la figure 1. Chacun des organes 2-5 est associé respectivement à un calculateur de contrôle 2.1, 3.1, 4.1, 5.1 et au moins à un capteur (non représenté). Un calculateur de contrôle 2.1, 3.1, 4.1, 5.1 est destiné à piloter l'organe 2-5 auquel il est associé.

Chaque calculateur de contrôle 2.1, 3.1, 4.1, 5.1 est apte à recevoir des données provenant des capteurs de l'organe 2-5 et 7-8 respectif associé. Tous les calculateurs 2.1, 3.1, 4.1, 5.1 sont commandés par un calculateur de supervision 1.1 qui a pour tâche d'harmoniser le fonctionnement des organes 2-5, de manière à pouvoir prendre des décisions et à synchroniser les actions des calculateurs 2.1, 3.1, 4.1, 5.1 pour répondre à la volonté d'un conducteur. Les calculateurs de contrôle 2.1, 3.1, 4.1, 5.1 et le calculateur de supervision 1.1 comportent chacun notamment, une mémoire programme, une mémoire de données connectées toute deux à un microprocesseur.

Dans la description, on prête des actions aux calculateurs 1.1, 2.1, 3.1, 4.1, 5.1 et aux programmes qu'ils exécutent, cela signifie que ces actions sont commandées par les microprocesseurs des calculateurs comportant lesdits programmes, lesdits microprocesseurs étant alors commandés par les codes d'instruction enregistrés dans les mémoires des calculateurs. Ces codes d'instruction permettent de commander les organes reliés aux calculateurs et donc de réaliser l'action entreprise.

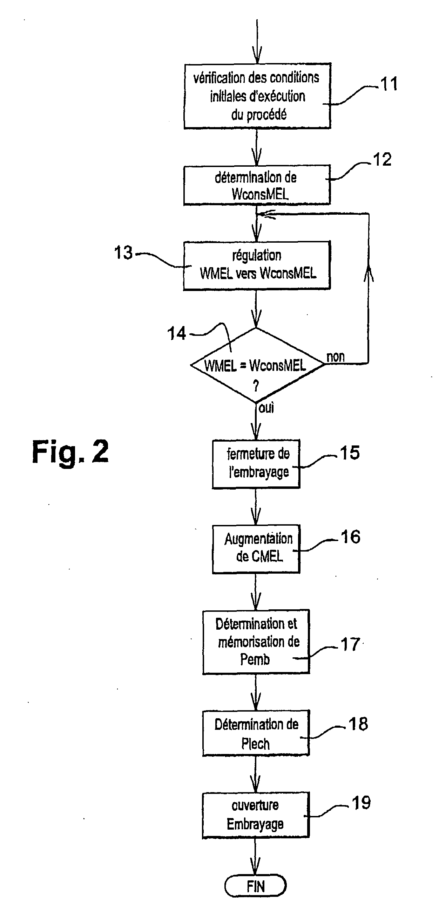

La figure 2 est un exemple de diagramme fonctionnel du procédé selon l'invention. Ce diagramme montre une étape préliminaire 11 dans laquelle le calculateur de supervision 1.1 effectue des étapes de vérification des conditions initiales, selon le procédé de l'invention.

Ainsi, dans une première étape de vérification, le calculateur de supervision 1.1 envoie une requête d'interrogation sur l'état de fonctionnement du moteur thermique 2 au calculateur de contrôle 2.1 associé à ce moteur 2. Ledit calculateur de contrôle 2.1 détermine au moyen de capteurs du moteur 2, si ce dernier est à l'arrêt.

Si le moteur 2 est à l'arrêt, le calculateur de contrôle 2.1 du moteur 2 renvoie, par exemple, zéro au calculateur de supervision 1.1.

Dans une deuxième étape de vérification, le calculateur de supervision 1.1 envoie une requête d'interrogation sur l'état de fonctionnement de l'embrayage 3 au calculateur de contrôle 3.1 associé à cet embrayage 3. Ledit calculateur de contrôle 3.1 détermine au moyens de capteurs de position (non représenté) de l'embrayage 3, si ce dernier est ouvert. Si l'embrayage est ouvert, le calculateur de contrôle 3.1 de l'embrayage 3 renvoie, par exemple, un au calculateur de supervision 1.1.

Dans une troisième étape de vérification, le calculateur de supervision 1.1 envoie une requête d'interrogation sur l'état de fonctionnement de la boite de vitesse 5, à transmission Mécanique Compact Pilotée (MCP), au calculateur de contrôle 5.1 associé à cette boite de vitesse 5. Ledit calculateur de contrôle 5.1 détermine au moyens de capteurs de la boîte de vitesse, si ce dernier est au neutre.

Lorsque la première, la deuxième et la troisième étapes de vérification sont validées, on passe à l'étape 11.

A l'étape 11, lorsque toutes les conditions précédemment citées sont réunies, la mise en oeuvre du procédé peut débuter.

A l'étape 13, une régulation du régime de la machine électrique est réalisée. En effet le calculateur de contrôle de la machine électrique commande une augmentation du couple de la machine électrique afin que le régime de la dite machine électrique soit égal à la consigne de régime.

A l'étape 14, une boucle de test est appliquée au procédé pour déterminer si le régime de la machine électrique est égal à la consigne qui a été donnée. Si le régime de la machine électrique est égal à la consigne qui a été donnée, alors on applique l'étape 15. Dans le cas contraire, on réitère l'étape 13.

A l'étape 15, une fermeture progressive de l'embrayage est réalisée afin de transmettre un couple résistif à la machine électrique. Ce couple résistif à pour but de perturber la régulation de régime de la machine électrique effectué à l'étape 13.

A l'étape 16, la régulation de régime réagit à la perturbation en augmentant le couple de la machine électrique en contrepartie du couple résistif du à la fermeture de l'embrayage.

Au cours de cette étape, on détecte la moindre différence de couple de la machine électrique généralement appelé « Delta », le rôle de cette détection sera définit par la suite.

Une boucle de test (non représentée) est appliquée au procédé pour déterminer si le Delta du couple de la machine électrique est supérieur à un seuil. Ce seuil est calibrable. Si le Delta de couple de la machine électrique est supérieur au seuil prédéfini, alors on applique l'étape 17. Dans le cas contraire on réitère l'augmentation de couple de l'étape 16.

A l'étape 17, on détermine puis on mémorise la position de l'actionneur de l'embrayage (par exemple au niveau d'une butée concentrique) à un instant « t » où le delta à été détecté lors de l'exécution de l'étape 16. La détermination de la position de l'actionneur de l'embrayage est restituée au calculateur de contrôle qui lui est associé par un capteur de position.

A l'étape 18, à partir de la position de l'actionneur de l'embrayage défini à l'étape 17, on détermine le point de léchage de l'embrayage dans les conditions d'usure et de température actuelle.

A l'étape 19, on procède à l'ouverture de l'embrayage pour finir la procédure d'apprentissage.

On comprend de ce qui précède que le procédé est réitéré autant de fois que le système ou qu'un opérateur le juge nécessaire pour recaler le point de léchage de l'embrayage.

La figure 3 montre des chronogrammes de signaux observables sur les différents organes 2 à 5 du dispositif de la figure 1 lors de la mise en oeuvre du procédé de l'invention. Ces signaux sont observables lorsqu'une procédure d'apprentissage est demandée.

Plus précisément, la figure 3 montre le signal de régime observable de la machine électrique, le signal de couple de la machine électrique et le signal correspondant à la position de l'actionneur de l'embrayage.

La figure 3 montre également l'évolution dans le temps de la consigne du régime de la machine électrique et la consigne de la position de l'actionneur de l'embrayage. Les signaux définis précédemment sont émis respectivement par un capteur de régime de la machine électrique, un capteur ou estimateur de couple de la machine électrique et un capteur de position de l'actionneur de l'embrayage. Chaque signal est capturé et traité par un calculateur de contrôle associé à l'organe dont il dépend. Tous les signaux traités sont collectés par le calculateur de supervision et analysés par ce dernier afin d'optimiser le pilotage des différents organes du véhicule.

A l'instant t0, le véhicule est à l'arrêt. La machine électrique 3 et le moteur thermique 1 possèdent tous deux un régime nul, la boîte est au neutre et l'embrayage est ouvert. A l'instant t0, le véhicule hybride est démarré et les conditions sont requises pour répondre à une séquence d'apprentissage du point de léchage.

Entre l'instant t0 et t1, dans cette première phase, le régime de la machine électrique augmente de manière exponentielle, si bien qu'à l'instant t1, le régime c'est stabilisé autour d'une valeur CRMEL correspondant à une consigne de régime de la machine électrique. Par ailleurs, entre l'instant t0 et t1, le signal de couple CMEL de la machine électrique 3 augmente linéairement pour se stabiliser autour d'une valeur de couple de la machine électrique 3.

Entre t0 et t1, l'embrayage reste ouvert à son maximum.

Entre les instants t1 et t2, dans cette deuxième phase, le calculateur de supervision envoie une consigne de fermeture lente et progressive de l'embrayage. Le calculateur rapproché de l'embrayage pilote l'actionneur d'embrayage afin de suivre cette consigne. Le régime de la machine électrique est toujours stabilisé autour de la valeur consigne donnée CRMEL. Le couple de la machine électrique est également stabilisé autour d'une valeur de couple.

Entre les instants t2 et t3, dans cette troisième phase, la fermeture lente et progressive de l'embrayage 2 entraîne la transmission d'un couple résistif à la machine électrique 3 perturbant ainsi la régulation de régime de ladite machine 3. En réaction à cette perturbation, une augmentation du couple de la machine électrique 3 est effectuée par un régulateur (non représenté). L'instant où une variation du couple de la machine électrique 3 est détectée comme étant supérieur à la valeur seuil, cet instant est référencé t2. À l'instant t2, on détermine puis mémorise la position de l'actionneur de l'embrayage, et on détermine le point de léchage. Le signal du couple de la machine électrique augmente pour être à l'instant t3 à une valeur CmaxMEL de telle sorte à pouvoir compenser et stabiliser de nouveau le régime de la machine électrique au tour de la valeur CRMEL. L'embrayage continue à se fermer jusqu'à l'instant t3.

Pour finir la procédure d'apprentissage du point de léchage, l'embrayage est de nouveau ouvert après l'instant t3. Cette ré-ouverture de l'embrayage, entraine une diminution du couple de la machine électrique. Cette ré-ouverture entraine également un retour du signal du régime de la machine électrique autour de la consigne CRMEL.

## Revendications

1. Procédé de détermination du point de léchage d'un embrayage de véhicule de type hybride au démarrage ou en changement de rapport de vitesse, ledit véhicule comportant une chaine de traction dont un moteur thermique et une machine électrique couplé entre eux par l'intermédiaire de l'embrayage de sorte que la combinaison du couple de la machine thermique et du couple de la machine électrique entraine la mise en rotation de l'arbre des roues du véhicule **caractérisé en ce qu'**il comporte les étapes suivantes,
A - vérification (11) que la machine thermique est à l'arrêt et que l'embrayage est ouvert,
B - régulation (13) du régime de la machine électrique,
C - fermeture (15) lente de l'embrayage,
D - augmentation (16) du couple de la machine électrique,
E - détection (16) d'une différence de couple de la machine électrique,
F - détermination puis mémorisation (17) de la position de l'actionneur d'embrayage au moment de cette détection,
G - détermination (18) du point de léchage de l'embrayage.

2. procédé selon la revendication 1 **caractérisé en ce que**, à l'étape A, l'embrayage est ouvert au maximum et le demeure pendant une durée déterminée.

3. Procédé selon la revendication 2 **caractérisé en ce que**, à l'étape B, la régulation (13) du régime de la machine électrique s'effectue vers une consigne donnée.

4. Procédé selon la revendication 3 **caractérisé en ce que**, à l'étape C, la fermeture (15) de l'embrayage s'effectue une fois que le régime de la machine électrique est stabilisé, afin de transmettre du couple résistif à la machine électrique et ainsi perturber sa régulation de régime.

5. Procédé selon la revendication 4 **caractérisé en ce que**, à l'étape D, l'augmentation (16) du couple de la machine électrique est effectuée pour compenser le couple résistif de l'embrayage.

6. Procédé selon la revendication 5 **caractérisé en ce que**, à l'étape E, la détection (16) d'une différence de couple de la machine électrique s'effectue pour les couples supérieurs à une valeur seuil.

7. Procédé selon la revendication 6 **caractérisé en ce que**, la valeur seuil est calibrable.

8. Procédé selon la revendication 7 **caractérisé en ce que**, à l'étape F de détermination (17) de la position de l'actionneur d'embrayage, est effectué par un capteur de position.

9. Procédé selon la revendication 8 **caractérisé en ce que**, une fois que le point de léchage est déterminée (18) l'embrayage est ré-ouvert (19).

## Claims

1. Method for determining the biting point of a clutch of a vehicle of the hybrid type on starting up or on changing the gear ratio, said vehicle comprising a power train, with a heat engine and an electric machine coupled with each other by means of the clutch so that the combination of the torque of the heat engine and of the torque of the electric machine entrains the setting in rotation of the shaft of the wheels of the vehicle, **characterized in that** it comprises the following stages
A - verification (11) that the heat engine is at a standstill and that the clutch is open,
B - regulation (13) of the speed of the electric
machine,
C - slow closure (15) of the clutch,
D - increase (16) of the torque of the electric machine,
E - detection (16) of a difference in torque of the electric machine,
F - determination then storage (17) of the position of the actuator of the clutch at the moment of this detection,
G - determination (18) of the biting point of the clutch.

2. Method according to Claim 1, **characterized in that**, at stage A, the clutch is open to the maximum and remains so for a determined duration.

3. Method according to Claim 2, **characterized in that**, at stage B, the regulation (13) of the speed of the electric machine is carried out towards a given setpoint.

4. Method according to Claim 3, **characterized in that**, at stage C, the closure (15) of the clutch is carried out once the speed of the electric machine is stabilized, so as to transmit resistive torque to the electric machine and to thus disturb its speed regulation.

5. Method according to Claim 4, **characterized in that**, at stage D, the increase (16) of the torque of the electric machine is carried out to compensate the resistive torque of the clutch.

6. Method according to Claim 5, **characterized in that**, at stage E, the detection (16) of a difference in torque of the electric machine is carried out for the torques greater than a threshold value.

7. Method according to Claim 6, **characterized in that** the threshold value is able to be calibrated.

8. Method according to Claim 7, **characterized in that**, at stage F, the determination (17) of the position of the actuator of the clutch is carried out by a position sensor.

9. Method according to Claim 8, **characterized in that** once the biting point is determined (18), the clutch is re-opened (19).

## Patentansprüche

1. Verfahren zum Bestimmen des Schleifpunkts einer Kupplung eines Fahrzeugs des hybriden Typs beim Starten oder Gangwechseln, wobei das Fahrzeug eine Zugkette aufweist, darunter einen Verbrennungsmotor und eine Elektromaschine, die miteinander über die Kupplung derart gekuppelt sind, dass die Kombination des Moments des Verbrennungsmotors und des Moments der Elektromaschine das Indrehungversetzen der Welle der Räder des Fahrzeugs bewirkt, **dadurch gekennzeichnet, dass** es die folgenden Schritte aufweist:
A - Prüfen (11), dass der Verbrennungsmotor stillsteht und dass die Kupplung offen ist,
B - Regeln (13) der Drehzahl der Elektromaschine,
C - langsames Schließen (15) der Kupplung,
D - Erhöhen (16) des Moments der Elektromaschine,
E - Erfassen (16) eines Momentunterschieds der Elektromaschine,
F - Bestimmen und dann Speichern (17) der Position des Kupplungsstellantriebs im Augenblick dieses Erfassens,
G - Bestimmen (18) des Schleifpunkts der Kupplung.

2. Verfahren nach Anspruch 1, **dadurch gekennzeichnet, dass** die Kupplung im Schritt A maximal offen ist und während einer bestimmten Dauer maximal offen bleibt.

3. Verfahren nach Anspruch 2, **dadurch gekennzeichnet, dass** im Schritt B die Regelung (13) der Drehzahl der Elektromaschine zu einem gegebenen Sollwert erfolgt.

4. Verfahren nach Anspruch 3, **dadurch gekennzeichnet, dass** im Schritt C das Schließen (15) der Kupplung erfolgt, sobald die Drehzahl der Elektromaschine stabilisiert ist, um Widerstandsmoment auf die Elektromaschine zu übertragen und **dadurch** ihre Drehzahlregelung zu stören.

5. Verfahren nach Anspruch 4, **dadurch gekennzeichnet, dass** im Schritt D die Erhöhung (16) des Moments der Elektromaschine erfolgt, um das Widerstandsmoment der Kupplung auszugleichen.

6. Verfahren nach Anspruch 5, **dadurch gekennzeichnet, dass** im Schritt E das Erfassen (16) eines Momentunterschieds der Elektromaschine für Momente oberhalb eines Schwellenwerts erfolgt.

7. Verfahren nach Anspruch 6, **dadurch gekennzeichnet, dass** der Schwellenwert kalibrierbar ist.

8. Verfahren nach Anspruch 7, **dadurch gekennzeichnet, dass** im Schritt F das Bestimmen (17) der Position des Kupplungsstellantriebs durch einen Lagesensor erfolgt.

9. Verfahren nach Anspruch 8, **dadurch gekennzeichnet, dass** die Kupplung wieder geöffnet wird (19), sobald der Schleifpunkt bestimmt ist (18).
